# EUROPEAN PATENT SPECIFICATION

(11) **EP 2 119 669 B1**
(45) Date of publication and mention of the grant of the patent: **20.03.2019**
(21) Application number: 08718461.0
(22) Date of filing: 31.01.2008
(51) Int. Cl.: C01B 39/48, B01J 29/04, B01J 20/18, B01J 29/70

(54) **MICROPOROUS CRYSTALLINE MATERIAL OF ZEOLITIC NATURE, ZEOLITE ITQ-39, METHOD OF PREPARATION AND USES**
MIKROPORÖSES KRISTALLINES MATERIAL ZEOLITHISCHER NATUR, ZEOLITH ITQ-39; HERSTELLUNGSVERFAHREN UND VERWENDUNGEN
MATIÈRE CRISTALLINE MICROPOREUSE DE NATURE ZÉOLITIQUE, ZÉOLITE ITQ-39, SON PROCÉDÉ DE PRÉPARATION ET UTILISATION

(30) Priority: 01.02.2007 ES 200700334
(43) Date of publication of application: 18.11.2009
(73) Proprietor: Consejo Superior De Investigaciones Científicas, 28006 Madrid (ES); Universidad Politecnica de Valencia, 46022 Valencia (ES)
(72) Inventor: CORMA CANÓS, Avelino, E-46022 Valencia (ES); MOLINER MARÍN, Manuel, E-46022 Valencia (ES); REY GARCÍA, Fernando, E-46022 Valencia (ES); GONZÁLEZ GONZÁLEZ, Jorge, E-46022 Valencia (ES)
(74) Representative: ExxonMobil Chemical Europe Inc.
(86) International application number: PCT/ES2008/070014
(87) International publication number: WO 2008/092984

(56) References cited:
- EP-A1- 1 010 667
- EP-A1- 1 852 394
- WO-A1-03/006376
- WO-A1-2005/030646
- WO-A1-2005/113438

## Description

### TECHNICAL FIELD

The present invention belongs to the technical field of zeolite microporous crystalline materials, useful as absorbers, catalysts and components of catalysers, for the processes of transformation, absorption and separation of organic compounds.

### BACKGROUND

Zeolites are microporous crystalline materials formed by a framework of TO4 tetrahedra sharing all their vertices, giving rise to a three-dimensional structure containing channels and/or cavities of molecular dimensions. They are of variable composition and T generally represents atoms with formal oxidation state of +3 or +4, such as Si, Ge, Ti, Al, B, Ga, etc. When any of the atoms T has an oxidation state of less than +4, the crystalline framework formed presents negative charges that are compensated by the presence of organic or inorganic cations in the channels or cavities. These channels and cavities can also hold organic molecules and H₂O, so that the chemical composition of zeolites can be represented by the following empirical formula:

x (M_{1/n}XO₂) : y YO₂ : z R : w H₂O

where M is one or several organic or inorganic cations with charge +n; X is one or several trivalent elements; Y is one or several tetravalent elements, generally Si; and R is one or several organic cations. Although the nature of M, X, Y and R and the values of x, y, z, y and w can be modified by post-synthesis treatments, the chemical composition of a zeolite (as it is synthesised or after heating) has a range that is characteristic of each zeolite and its method of preparation.

The crystalline structure of each zeolite, with a specific system of channels and cavities gives rise to a characteristic X-ray diffraction pattern, which enables differentiation between them.

Many zeolites have been synthesised in the presence of an organic molecule that acts as a directing agent for the structure. The organic molecules that act as structure directing agents (SDA) generally contain nitrogen in their composition and can give rise to stable organic cations in the reaction medium. The mobilisation of the precursor species during synthesis of zeolites can be carried out in the presence of hydroxyl groups and an alkaline medium, which can be introduced as the hydroxide of the same SDA, such as, for example, tetrapropylammonium hydroxide in the case of zeolite ZSM-5. Fluoride ions can also act as mobilising agents in the synthesis of zeolites. For example in the patent EP-A-337479, the use of HF in water at low pH is disclosed as a mobilising agent of silica for the synthesis of zeolite ZSM-5. EP1852394 A1 discloses a microporous crystalline zeolite material ITQ-32 which, in the calcined state and in the absence of defects in the crystalline lattice thereof, manifested by the presence of silanols, has empirical formula x (M_{1/n}XO₂) : y YO₂ : SiO₂ , in which M is selected from among H⁺, at least one inorganic cation with charge +n and a mixture of both; X is at least one chemical element in oxidation state +3; Y is at least one chemical element in oxidation state +4, which is different from Si, x has a value of between 0 and 0.2 inclusive, and y has a value of between 0 and 0.1 inclusive. WO03/006376 A1 discloses a process for preparing zeolites using pyrrolidinium cations as structure directing agents. EP1010667 A1 discloses molecular sieves having a three dimensional framework structure composed of at least SnO₂ and SiO₂ tetrahedral oxide units (and optionally TiO₂ and GeO₂ units) and having an empirical formula of: (Snₓ Ti_{y} Si_{1-x-y-z} Ge_{z})O₂ where "x", "y" and "z" are the mole fractions of tin, titanium and germanium respectively. WO2005/030646 A1 discloses the use of tetrahydrofolate, methylenetetrahydrofolate and/or methyl-tetrahydrofolate, and at least one multi-targeting antifolate, for the manufacture of a pharmaceutical composition for the treatment of cancer. WO2005/113438 A1 discloses UZM-16 zeolites prepared using benzyltrimethyl-ammonium (BzTMA) cation or a combination of BzTMA and at least one other quaternary ammonium cation.

### DESCRIPTION OF THE INVENTION

The present invention relates to a new microporous crystalline zeolite, identified as "zeolite ITQ-39", and the process of its preparation. This material, both in the heated and the synthesised form without heating, has an X-ray diffraction pattern that is different from other known zeolite materials and therefore is characteristic of this material.

The present invention relates, firstly, to a zeolite microporous crystalline material that has, in the heated state and in the absence of defects in its crystalline framework manifested by the presence of silanols, the empirical formula:

x (M_{1/n}XO₂) : y YO₂ : SiO₂

in which
M is selected from H⁺, at least one inorganic cation of charge +n, and a mixture of both,
X is at least one chemical element in the oxidation state of +3, selected from Al, Ga, B, Fe, Cr and mixtures of these.
Y is at least one chemical element in the oxidation state +4 other than Si, selected from Ge, Ti, Sn, V and mixtures of these
x takes a value between 0 and 0.3, both included,
y takes a value between 0 and 0.1, both included,
and such that the material, after heating, has an X-ray diffraction pattern with at least the values of angle 2θ (degrees) and relative intensities (I/I₀) shown in Table II, I₀ being the intensity of the most intense peak to which a value of 100 is assigned:

**Table II**

| 2θ (degrees)±0.5 | Intensity (I/I₀) |
|---|---|
| 8 | mf |
| 8.6 | d (h) |
| 14.8 | d |
| 15.8 | d |
| 19.4 | d |
| 21.4 | m |
| 22.1 | f |
| 23.0 | mf |
| 26.3 | m |
| 27.6 | d |
| 32.0 | d |
| 43.9 | d |

where d is a relatively weak intensity between 0 and 20%,
m is a relatively medium intensity between 20 and 40%,
f is a relatively strong intensity between 40 and 60%,
mf is a relatively very strong intensity between 60 and 100%, and
h relates to the fact this peak of diffraction appears as a shoulder.

In the empirical formula above, "x" preferably takes a value of less than 0.3.

In the empirical formula above, "y" preferably takes a value of less than 0.05.

According to a specially preferred embodiment of the present invention, the zeolite microporous crystalline material ITQ-39 has,
M selected from H⁺, at least an inorganic cation of charge +n selected from alkaline, alkaline earth metals and combinations of these and a mixture of both,
where
y takes a value between 0 and 0.05, both included,
and the material, as it is synthesised, has an X-ray diffraction pattern with at least the values of angle 2θ (degrees) and relative intensities shown in Table I below and this material has in the heated state an X-ray diffraction pattern with at least the values of angle 2θ (degrees) and relative intensities (I/I₀) previously mentioned (Table II).

**Table I**

| 2θ (degrees)±0.5 | Intensity (I/I₀) |
|---|---|
| 7.8 | f |
| 8.5 | d (h) |
| 15.8 | d |
| 19.3 | d |
| 21.4 | m |
| 22.0 | f |
| 22.8 | mf |
| 26.2 | d |
| 27.5 | d |
| 32.0 | d |
| 43.5 | d |

The X-ray diffraction patterns of ITQ-39 were obtained by the powder method using a fixed divergence slit of 1/4° and using the Kα radiation of Cu. It should be taken into account that the diffraction data listed for this sample of zeolite ITQ-39 as simple or unique lines can be formed by multiple overlaps or superpositions of reflections that, under certain conditions such as differences in crystallographic changes can appear as resolved or partially resolved lines. Generally, crystallographic changes can include small variations in the unit cell parameters and/or changes in the crystal symmetry without these producing a change in structure. Thus, the positions, widths and relative intensities of the peaks depend to a certain extent on the chemical composition of the material and on the degree of hydration and crystal size.

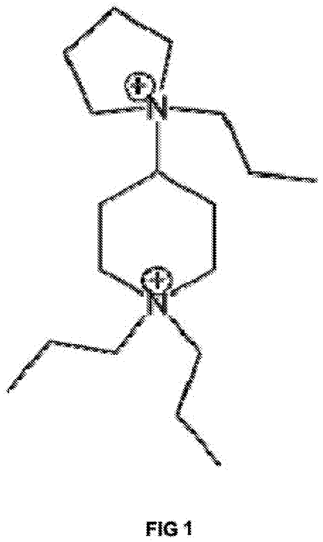

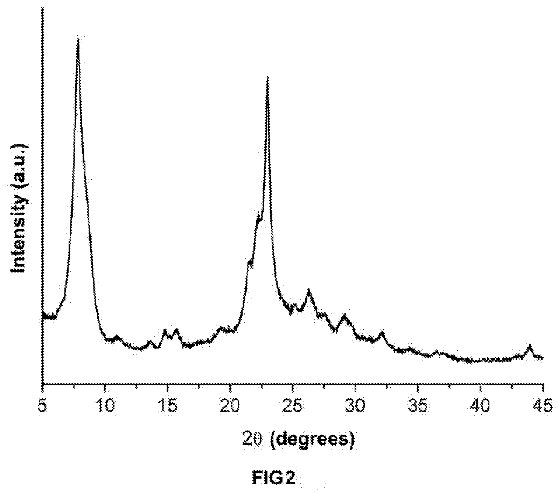

In an unclaimed aspect, when the framework is exclusively composed of silicon and aluminium oxides, in a molar ratio Si/AI = 13 and it has been synthesised in the presence of fluoride anions using the quaternary diammonium dication as the structure directing agent shown in Figure 1, which will be called SDA-1 throughout this invention, zeolite ITQ-39 as it is synthesised presents an X-ray diffraction pattern as shown in Figure 2. This diagram is characterised by the values of angle 2θ (degrees) and relative intensities (I/I₀) shown in Table III.

**Table III**

| 2θ (degrees) | Intensity (I/I₀) |
|---|---|
| 7.8198 | 49.56 |
| 8.6885 | 13.82 |
| 15.7045 | 4.51 |
| 19.2097 | 7.54 |
| 21.3591 | 32.59 |
| 22.0000 | 45.40 |
| 22.7964 | 100.00 |
| 25.0561 | 9.92 |
| 26.2576 | 13.17 |
| 27.4230 | 7.01 |
| 28.7596 | 6.87 |
| 29.4369 | 5.87 |
| 31.9616 | 5.07 |
| 34.1133 | 1.72 |
| 36.1252 | 1.17 |
| 36.7736 | 2.03 |
| 42.6035 | 1.28 |
| 43.4655 | 5.76 |

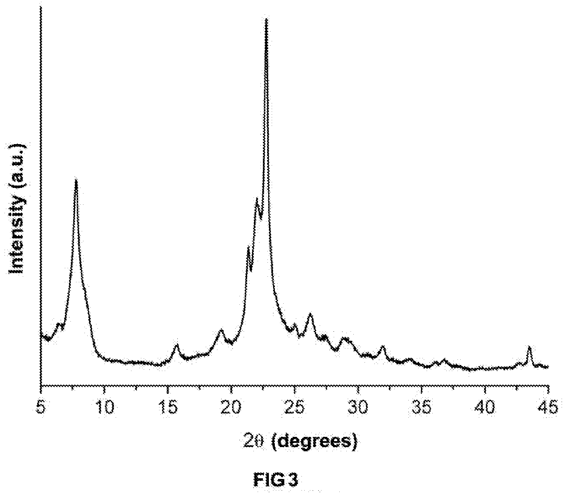

The X-ray diffraction pattern of the previous sample of ITQ-39 after being heated at 580°C to eliminate occluded organic compounds inside is shown in Figure 3. This diffraction pattern is characterised by the values of angle 2θ (degrees) and relative intensities (I/I₀) that are shown in Table IV. The comparison of the X-ray diffraction patterns of zeolite ITQ-39 as synthesised and after heating show the great thermal stability of the material.

**Table IV**

| 2θ (degrees) | Intensity (I/I₀) |
|---|---|
| 7.8461 | 100.00 |
| 8.7039 | 37.71 |
| 11.0092 | 1.47 |
| 13.6688 | 2.40 |
| 14.7903 | 5.20 |
| 15.7731 | 5.95 |
| 19.2573 | 5.47 |
| 21.4378 | 28.77 |
| 22.1339 | 44.61 |
| 22.9739 | 95.99 |
| 25.1759 | 15.59 |
| 26.3257 | 20.77 |
| 27.6284 | 12.92 |
| 29.1717 | 12.52 |
| 32.1493 | 7.69 |
| 34.3923 | 2.64 |
| 36.4259 | 1.95 |
| 43.9105 | 4.31 |

In a second aspect, the present invention relates to a process for synthesising the microporous crystalline material ITQ-39, characterised in that the reaction mixture comprises at least:
one or more sources of SiO₂,
an optional source of one or several tetravalent elements Y, other than Si, selected from Ge, Ti, Sn, V and mixtures of these,
an optional source of one or several trivalent elements X selected from Al, B, Ga, Fe, Cr and mixtures of these,
an optional source of inorganic M of charge +n,
one or several sources of the organic cation SDA-1,
one or more sources of fluoride ions, and
water;
the mixture is heated to a temperature of between 80 and 200°C until crystallisation is achieved and in that the reaction mixture has a composition, in terms of molar ratios, in the ranges:
SDA-1(OH)₂/SiO₂ = 0.01-1.0,
M_{1/n}OH/SiO₂ = 0-1.0,
X₂O₃/SiO₂ = 0-0.15
YO₂/SiO₂ = 0-0.01
F/SiO₂ = 0.1-3.0, and
H₂O/SiO₂ = 0.5-50.

According to a particular embodiment of the process, the reaction mixture comprises exclusively:
one or more sources of SiO₂,
one or several sources of the organic cation SDA-1,
one or more sources of fluoride ions, and
water,
and has a composition, in terms of molar ratios, in the ranges:
SDA-1(OH)₂/SiO₂ = 0.01-1.0,
F/SiO₂ = 0.1-3.0, and
H₂O/SiO₂ = 0.5-50.

According to a particular additional embodiment of the process, the reaction mixture additionally comprises:
a source of one or several trivalent elements X,
and has a composition, in terms of molar ratios, in the ranges:
SDA-1(OH)₂/SiO₂ = 0.01-1.0,
X₂O₃/SiO₂ = 0-0.15, excluding the value 0,
F/SiO₂ = 0.1-3.0, and
H₂O/SiO₂ = 0.5-50. According to a particular additional embodiment of the process, the reaction mixture additionally comprises:
   a source of one or several other tetravalent elements Y, other than Si,
   and has a composition, in terms of molar ratios, in the ranges: SDA-1(OH)₂/SiO₂ = 0.01-1.0,
   YO₂/SiO₂ = 0-0.1, excluding the value 0,
   F/SiO₂ = 0.1-3.0, and
   H₂O/SiO₂ = 0.5-50.

According to a particular additional embodiment of the process, the reaction mixture additionally comprises:
a source of one or several other tetravalent elements Y, other than Si,
a source of one or several trivalent elements X,
   and has a composition, in terms of molar ratios, in the ranges:
   SDA-1(OH)₂/SiO₂ = 0.01-1.0,
   X₂O₃/SiO₂ = 0-0.15, excluding the value 0,
   YO₂/SiO₂ = 0-0.1, excluding the value 0,
   F/SiO₂ = 0.1-3.0, and
   H₂O/SiO₂ = 0.5-50.

According to a particular preferred embodiment of the process, the reaction mixture comprises:
a source of SiO₂,
a source of one or several other tetravalent elements Y, other than Si,
   selected from Ge, Ti, V, Sn and mixtures of these,
a source of one or several trivalent elements X selected from Al, B, Ga, Fe, Cr and mixtures of these,
a source of inorganic cations M of charge +n, selected from the alkaline metals, alkaline earths and mixtures of these,
a source of organic cation SDA-1²⁺, which is shown in Figure 1,
   a source of fluoride ions and
water;
the mixture is heated with or without stirring to a temperature of between 80 and 200°C until crystallisation is achieved and in that the reaction mixture has a composition, in terms of molar ratios, in the ranges:
SDA-1(OH)₂/SiO₂ = 0.1-1.0,
M_{1/n}OH/SiO₂ = 0-0.2
X₂O₃/SiO₂ = 0-0.07
YO₂/SiO₂ = 0-0.05
F/SiO₂ = 0.1-2.0,
H₂O/SiO₂ = 1-20.

The composition of the reaction mixture giving rise to obtaining the ITQ-39 material can be generally represented by the following formula, with the values of parameters indicating the molar ratios:

r SDA-1(OH)₂ : s M_{1/n}OH : t X₂O₃ : u YO₂ : v F : SiO₂ : w H₂O

where M is one or several inorganic cations of charge +n, preferably alkaline metals or alkaline earths; X is one or several trivalent elements, selected from Al, B, Ga, Fe, Cr or mixtures of these; Y is one or several tetravalent elements other than Si, selected from Ge, Ti, Sn, V or mixtures of these; SDA-1 is the cation shown in Figure 1; F is one or several sources of fluoride ions, preferably HF, NH₄F or a mixture of both and the values of r, s, t, u, v and w fall in the ranges:
r = SDA-1(OH)₂/SiO₂ = 0.01-1.0, preferably 0.1-1.0,
s = M_{1/n}OH/SiO₂ = 0-1.0, preferably 0-0.2,
t = X₂O₃/SiO₂ = 0-0.15, preferably 0-0.07,
u = YO₂/SiO₂ = 0-0.1, preferably 0-0.05,
v = F/SiO₂ = 0.1-3.0, preferably 0.1-2.0,
w = H₂O/SiO₂ = 0.5-50, preferably 1-20.

The components of the synthesis mixture can originate from different sources and the times and conditions of crystallisation may be affected by this.

Preferably, the thermal treatment of the mixture is carried out at a temperature of between 130 and 200°C. The thermal treatment of the reaction mixture can be performed either statically or with stirring of the mixture. After the crystallisation is complete, the solid product is separated by filtration or centrifugation and is dried. Subsequent heating at temperatures higher than 350°C, preferably between 400 and 1000°C causes decomposition of the occluded organic residues inside the zeolite and their removal, leaving the zeolite channels free.

The source of SiO₂ can be, for example, tetraethyl orthosilicate, colloidal silica, amorphous silica or a mixture of these.

The fluoride anion is used as a mobilising agent for the precursor species. The source of fluoride ions is preferably HF, NH₄F or a mixture of both.

The organic cation, represented by SDA-1, is added to the reaction mixture preferably in the form of a salt, for example, a halide, or in the form of a hydroxide and, additionally, a source of alkaline metal, alkaline earth ions or a mixture of both (M) can be added in the form of a hydroxide or a salt. The organic cation SDA-1 is synthesised following the process represented in the following schema:

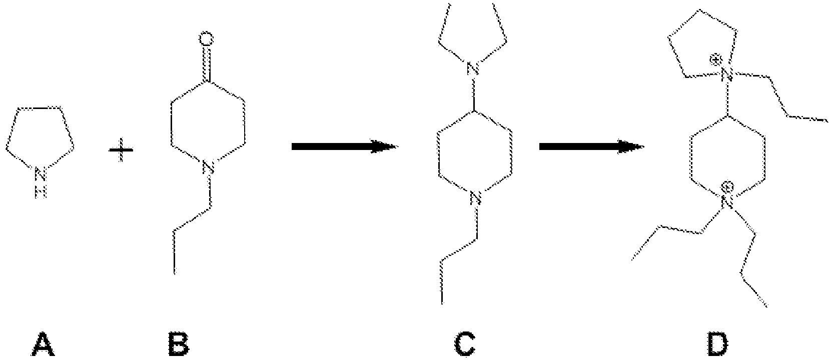

In this process, a reductive amination reaction is carried out of 1-propyl-4-piperidone (product B) with pyrrolidine (product A) giving rise to the corresponding diamine (product C). The diamine is diquarternised by propyl halide to be transformed into the SDA-1 dication (product D).

According to a particular embodiment of the process, some crystalline material ITQ-39 of the present invention is added to the reaction mixture as crystallisation promoter in a quantity in the range of 0.01 and 20% by weight, preferably between 0.05 and 10% by weight with respect to the total added inorganic oxides.

In addition, the material produced by this invention can be pelletised in accordance with known techniques and can be used as a catalyst or catalyser component in processes of transformation of organic compounds or as absorbent in processes of absorption and separation of organic compounds.

The ITQ-39 material used in these applications can be in its acid form and/or exchanged with suitable cations.

### EXAMPLES

### Example 1. Preparation of the dication shown in Figure 1 in the form of a dihydroxide.

The organic cation is prepared as follows: 30 g of pyrrolidine are dissolved in 200 ml of methanol and this solution is acidified with HCI (5 N in methanol) to reach pH = 7.5, continuously cooling the mixture in an external bath at 0°C. Then 37 g of 1-propyl-4-piperidone are added, followed by 10.5 g of NaBH₃CN. The resulting mixture is maintained at ambient temperature and stirred continuously for 72 hours.

To this mixture, HCI is added slowly to reach a pH less than 2, displacing the HCN by means of a continuous current of nitrogen. The resulting solution is concentrated by means of a rotavapor and a solution of KOH (25% by weight) is added until reaching a pH higher than 12. In this step, a white precipitate appears. The resulting mixture is saturated with NaCl and poured over water. Finally, the diamine, 1-propyl-4-pyrrolidin-1-yl-piperidine, is extracted with diethyl ether and dried with anhydrous MgSO₄.

The quarternisation of the diamine is performed as follows: 100 g of propyl idodide are added on a solution of 43.5 g of diamine in 70 ml of MeOH. The mixture is maintained with continuous stirring at ambient temperature for 7 days, when a white precipitate is formed. The solid is vacuum filtered. The characterisation of this solid by elemental analysis and nuclear magnetic resonance of ¹H and of ¹³C confirms that it is the diiodide of the cation [SDA-1]²⁺ that is shown in Figure 1.

The iodide of the cation is exchanged for a hydroxide using an ion exchange resin in accordance with the following process: 44 mmol of the iodide of the cation ([SDA-1]I₂) are dissolved in water. 89 g of Dowex SBR resin are added to the solution obtained and this is maintained with stirring until the next day. Then the mixture is filtered, washed with distilled water and a solution of the dihydroxide of the cation shown in Figure 1 ([SDA-1](OH)₂) is obtained. This is evaluated with aqueous HCI using phenolphaline as an indicator, obtaining an exchange efficiency higher than 90%. The final solution contains 0.62 equivalents of hydroxide per 1000 g of solution.

### Example 2. Synthesis of ITQ-39.

0.480 g of Al isopropoxide are added over 10 g of tetraethyl orthosilicate (TEOS). Then, 39.83 g of a solution of [SDA-1](OH)₂ are added, where SDA-1 is the dication shown in Figure 1, which contains 0.62 equivalents of hydroxide in 1000 g. The mixture is left evaporating while stirring until complete elimination of the ethanol from the hydrolysis of the TEOS plus the quantity of water required to reach the final composition indicated. Finally, 1.03 g of a solution of hydrofluoric acid (48% HF by weight) is added. The composition of the gel is:

SiO₂ : 0.0245 Al₂O₃ : 0.26 [SDA-1](OH)₂ : 0.51 HF : 2.47 H₂O

where SDA-1 is the dication shown in figure 1.

The gel is heated statically for 7 days in steel autoclave with an internal Teflon cover at 150°C. The solid obtained after filtration, washing with distilled water and drying at 100°C is ITQ-39.

### Example 3. Synthesis of ITQ-39.

0.096 g of Al isopropoxide are added over 5 g of tetraethyl orthosilicate (TEOS). Then, 19.04 g of a solution of [SDA-1](OH)₂ is added, where SDA-1 is the dication shown in Figure 1, which contains 0.63 equivalents of hydroxide in 1000 g. The mixture is allowed to evaporate while stirring until complete elimination of the ethanol from the hydrolysis of the TEOS plus the quantity of water required to reach the final composition indicated. Finally, 0.5 g of a solution of hydrofluoric acid (48% HF by weight) is added. The composition of the gel is:

SiO₂ : 0.0098 Al₂O₃ : 0.25 [SDA-1](OH)₂ : 0.50 HF : 2.43 H₂O

where SDA-1 is the dication shown in figure 1.

The gel is statically heated for 12 days in steel autoclave with an internal Teflon cover at 135□. The solid obtained after filtration, washing with distilled water and drying at 100°C is ITQ-39.

### Example 4. Synthesis of ITQ-39.

0.384 g of Al isopropoxide are added over 2 g of tetraethyl orthosilicate (TEOS). Then, 8.96 g of a solution of [SDA-1](OH)₂ is added, where SDA-1 is the dication shown in Figure 1, which contains 0.62 equivalents of hydroxide in 1000 g. The mixture is allowed to evaporate while stirring until complete elimination of the ethanol from the hydrolysis of the TEOS plus the quantity of water required to reach the final composition indicated. Finally, 0.235 g of a solution of hydrofluoric acid (48% HF by weight) is added. The composition of the gel is:

SiO₂ : 0.098 Al₂O₃: 0.29 [SDA-1](OH)₂ : 0.59 HF : 2.4 H₂O

where SDA-1 is the dication shown in figure 1.

The gel is statically heated for 14 days in steel autoclave with an internal Teflon cover at 150□. The solid obtained after filtration, washing with distilled water and drying at 100°C is ITQ-39.

### Example 5. Synthesis of ITQ-39.

1.21 g of Al isopropoxide are added over 15.94 g of tetraethyl orthosilicate (TEOS). Then, 58.55 g of a solution of [SDA-1](OH)₂ is added, where SDA-1 is the dication shown in Figure 1, which contains 0.63 equivalents of hydroxide in 1000 g. The mixture is allowed to evaporate while stirring until complete elimination of the ethanol from the hydrolysis of the TEOS plus the quantity of water required to reach the final composition indicated. Finally, 1.58 g of a solution of hydrofluoric acid (48% HF by weight) is added. The composition of the gel is:

SiO₂ : 0.039 Al₂O₃: 0.24 [SDA-1](OH)₂ : 0.50 HF : 1.62 H₂O

where SDA-1 is the dication shown in figure 1.

The gel is statically heated for 11 days in steel autoclave with an internal Teflon cover at 150°C. The solid obtained after filtering, washing with distilled water and drying at 100°C is ITQ-39 and its X-ray diffraction pattern is shown in Figure 2. The solid after heating in air at 580°C for six hours maintains the zeolite structure, as can be deduced from the X-ray diffraction pattern shown in Figure 3.

### Brief description of the figures

Figure 1 shows the organic cation, in the presence of which the zeolite ITQ-39 is synthesised.
Figure 2 shows the most characteristic peaks of the X-ray diffraction pattern of the ITQ-39 material, as it is synthesised according to example 5.
Figure 3 shows the most characteristic peaks of the X-ray diffraction pattern of the material of example 5 after heating.

## Claims

1. A zeolite microporous crystalline material **characterised in that** it has, in the heated state and in the absence of defects in its crystalline framework manifested by the presence of silanols, the empirical formula:
x (M_{1/n}XO₂) : y YO₂ : SiO₂
in which
M is selected from H⁺, at least one inorganic cation of charge +n, and a mixture of both,
X is at least one chemical element in the oxidation state of +3, selected from Al, Ga, B, Fe, Cr and mixtures of these,
Y is at least one chemical element in the oxidation state +4 other than Si, selected from Ge, Ti, Sn, V and mixtures of these,
x takes a value between 0 and 0.3, both included,
y takes a value between 0 and 0.1, both included,
and **in that** the material, after heating, has an X-ray diffraction pattern that presents at least the following diffraction peaks at values of angle 2θ (degrees) and relative intensities:
| 2θ (degrees)± 0.5 | Intensity (I/I₀) |
|---|---|
| 7.8 | mf |
| 8.6 | d (h) |
| 14.8 | d |
| 15.8 | d |
| 19.4 | d |
| 21.4 | m |
| 22.1 | f |
| 23.0 | mf |
| 26.3 | m |
| 27.6 | d |
| 32.0 | d |
| 43.9 | d |
where
d is a relatively weak intensity between 0 and 20%,
m is a relatively medium intensity between 20 and 40%,
f is a relatively strong intensity between 40 and 60%,
mf is a relatively very strong intensity between 60 and 100%, and
h relates to the fact this peak of diffraction appears as a shoulder.

2. A zeolite microporous crystalline material according to claim 1, **characterised in that** X is Al.

3. A zeolite microporous crystalline material according to claim 1, **characterised in that** "x" takes a value less than 0.2.

4. A zeolite microporous crystalline material according to claim 1, **characterised in that** "y" takes a value less than 0.05, preferably **characterized in that** "y" is 0.

5. A zeolite microporous crystalline material according to claim 1,
in which
M is selected from H⁺, at least one inorganic cation of charge +n selected from alkaline, alkaline earth metals and combinations of these and a mixture of both, where
y takes a value between 0 and 0.05, both included,
and the material, as synthesised, has an X-ray diffraction pattern with at least the following values of angle 2θ (degrees) and relative intensities:
| 2θ (degrees)± 0.5 | Intensity (I/I₀) |
|---|---|
| 7.8 | f |
| 8.5 | d (h) |
| 15.8 | d |
| 19.3 | d |
| 21.4 | m |
| 22.0 | f |
| 22.8 | mf |
| 26.2 | d |
| 27.5 | d |
| 32.0 | d |
| 43.5 | d |
where
d is a relatively weak intensity between 0 and 20%,
m is a relatively medium intensity between 20 and 40%,
f is a relatively strong intensity between 40 and 60%,
mf is a relatively very strong intensity between 60 and 100%, and
h relates to the fact this peak of diffraction appears as a shoulder.

6. A process for synthesising the microporous crystalline material of any one of the claims 1 to 5, **characterised in that** the reaction mixture comprises at least:
one or more sources of SiO₂,
an optional source of one or several tetravalent elements Y, other than Si, selected from Ge, Ti, Sn, V and mixtures of these,
an optional source of one or several trivalent elements X selected from Al, B, Ga, Fe, Cr and mixtures of these,
an optional source of inorganic cation M of charge +n,
a source of an organic dication SDA-1, the formula of which is shown below, 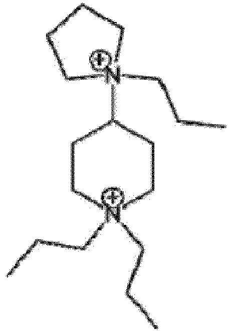
one or more sources of fluoride ions, and
water;
the mixture is heated to a temperature of between 80 and 200°C until crystallisation is achieved and **in that** the reaction mixture has a composition, in terms of molar ratios, in the ranges:
SDA-1(OH)₂/SiO₂ = 0.01-1.0,
M_{1/n}OH/SiO₂ = 0-1.0,
X₂O₃/SiO₂ = 0-0.15,
YO₂/SiO₂ = 0-0.1,
F/SiO₂ = 0.1-3.0,
H₂O/SiO₂ = 0.5-50.

7. A process according to claim 6, **characterised in that** the reaction mixture has a composition, in terms of molar ratios, in the ranges:
SDA-1(OH)₂/SiO₂ = 0.1-1.0,
M_{1/n}OH/SiO₂ = 0-0.2,
X₂O₃/SiO₂ = 0-0.07,
YO₂/SiO₂ = 0-0.05,
F/SiO₂ = 0.1-2.0,
H₂O/SiO₂ = 1-20
in which M is selected from the alkaline metals, alkaline earth metals, and mixtures of these.

8. A process according to claim 6 or 7, **characterised in that** the one or several sources of fluoride ions is HF, NH₄F or a mixture of both.

9. A process according to claim 6 or 7, **characterised in that** the organic cation SDA-1 is added in a form selected from hydroxide, salt and mixture of the hydroxide and salt, preferably wherein the salt is a halide.

10. A process according to claim 6 o r 7, **characterised in that** a quantity of crystalline material ITQ-39 is added to the reaction mixture as a crystallisation promoter, in a quantity of between 0.01 and 20% by weight with respect to the total added inorganic oxides.

11. A process according to claim 6 o r 7, **characterised in that** a quantity of crystalline material ITQ-39 is added to the reaction mixture as a crystallisation promoter, in a quantity of between 0.05 and 10% by weight with respect to the total added inorganic oxides.

12. Use of an active form of the material of claim 1 as a catalyst or component of catalysers in processes of transformation of organic compounds.

13. Use of an active form of the material in claim 1 in processes of separation of organic compounds.

14. Use of an active form of the material in claim 1 as an absorbent in processes of absorption of organic compounds.

15. Use according to any of the claims 12 to 14, **characterised in that** said material is in the form selected from the acid, exchanged with cations and a mixture of both forms.

## Patentansprüche

1. Mikroporöses kristallines Zeolithmaterial, **dadurch gekennzeichnet, dass** es im erwärmten Zustand und in Abwesenheit von Defekten in seinem kristallinen Grundgerüst, die durch die Anwesenheit von Silanolen sichtbar werden, die folgende empirische Formel aufweist:
x (M_{1/n}XO₂) : y YO₂ : SiO₂
worin:
M aus H⁺, mindestens einem anorganischen Kation der Ladung +n und einer Mischung von beiden ausgewählt ist,
X mindestens ein chemisches Element im Oxidationszustand +3 ist, das ausgewählt ist aus Al, Ga, B, Fe, Cr und Mischungen von diesen,
Y mindestens ein chemisches Element im Oxidationszustand +4 ist, das von Si verschieden ist und ausgewählt ist aus Ge, Ti, Sn, V und Mischungen von diesen,
x einen Wert zwischen 0 und 0,3 annimmt, beide einschließlich,
y einen Wert zwischen 0 und 0,1 annimmt, beide einschließlich, und dass das Material nach dem Erwärmen ein Röntgenbeugungsspektrum aufweist, das mindestens die folgenden Beugungspeaks bei Werten des Winkels 2θ (Grad) und die folgenden relativen Intensitäten aufweist:
| 2θ (Grad) ± 0,5 | Intensität (I/I₀) |
|---|---|
| 7,8 | mf |
| 8,6 | d (h) |
| 14,8 | d |
| 15,8 | d |
| 19,4 | d |
| 21,4 | m |
| 22,1 | f |
| 23,0 | mf |
| 26,3 | m |
| 27,6 | d |
| 32,0 | d |
| 43,9 | d |
wobei:
d eine relativ schwache Intensität zwischen 0 und 20 % ist,
m eine relativ mittlere Intensität zwischen 20 und 40 % ist,
f eine relativ starke Intensität zwischen 40 und 60 % ist,
mf eine relativ sehr starke Intensität zwischen 60 und 100 % ist, und
h sich auf die Tatsache bezieht, dass dieser Beugungspeak als Schulter erscheint.

2. Mikroporöses kristallines Zeolithmaterial nach Anspruch 1, **dadurch gekennzeichnet, dass** X Al ist.

3. Mikroporöses kristallines Zeolithmaterial nach Anspruch 1, **dadurch gekennzeichnet, dass** "x" einen Wert kleiner als 0,2 annimmt.

4. Mikroporöses kristallines Zeolithmaterial nach Anspruch 1, **dadurch gekennzeichnet, dass** "y" einen Wert kleiner als 0,05 annimmt, vorzugsweise **dadurch gekennzeichnet, dass** "y" 0 ist.

5. Mikroporöses kristallines Zeolithmaterial nach Anspruch 1, in dem
M ausgewählt ist aus H⁺, mindestens einem anorganischen Kation mit der Ladung +n ausgewählt aus Alkalimetallen, Erdalkalimetallen und Kombinationen von diesen und einer Mischung von beiden, wobei
y einen Wert zwischen 0 und 0,05 annimmt, beide einschließlich, und das Material wie synthetisiert ein Röntgenbeugungsspektrum mit mindestens den folgenden Werten des Winkels 2θ (Grad) und den folgenden relativen Intensitäten aufweist:
| 2θ (Grad) ± 0,5 | Intensität (I/I₀) |
|---|---|
| 7,8 | f |
| 8,5 | d (h) |
| 15,8 | d |
| 19,3 | d |
| 21,4 | m |
| 22,0 | f |
| 22,8 | mf |
| 26,2 | d |
| 27,5 | d |
| 32,0 | d |
| 43,5 | d |
wobei:
d eine relativ schwache Intensität zwischen 0 und 20 % ist,
m eine relative mittlere Intensität zwischen 20 und 40 % ist,
f eine relativ starke Intensität zwischen 40 und 60 % ist,
mf eine relativ sehr starke Intensität zwischen 60 und 100 % ist, und
h sich auf die Tatsache bezieht, dass dieser Beugungspeak als Schulter erscheint.

6. Verfahren zum Synthetisieren des mikroporösen kristallinen Materials nach einem der Ansprüche 1 bis 5, **dadurch gekennzeichnet, dass** die Reaktionsmischung mindestens folgende umfasst:
eine oder mehrere Quellen für SiO₂,
eine optionale Quelle für ein oder mehrere vierwertige Elemente Y, die von Si verschieden sind und ausgewählt sind aus Ge, Ti, Sn, V und Mischungen von diesen,
eine optionale Quelle für ein oder mehrere dreiwertige Elemente X ausgewählt aus Al, B, Ga, Fe, Cr und Mischungen von diesen,
eine optionale Quelle für anorganisches Kation M mit der Ladung +n,
eine Quelle für ein organisches Dikation SDA-1, dessen Formel unten gezeigt wird, 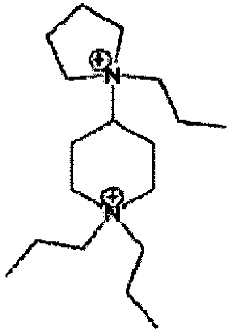
eine oder mehrere Quellen für Fluoridionen, und
Wasser;
die Mischung auf eine Temperatur zwischen 80 und 200°C erwärmt wird, bis Kristallisation erhalten wird, und dass die Reaktionsmischung eine Zusammensetzung in Form von Molverhältnissen in den folgenden Bereichen aufweist:
SDA-1(OH)₂/SiO₂ = 0,01-1,0,
M_{1/n}OH/SiO₂ = 0-1,0,
X₂O₃/SiO₂ = 0-0,15,
YO₂/SiO₂ = 0-0,1,
F/SiO₂ = 0,1-3,0,
H₂O/SiO₂ = 0,5-50.

7. Verfahren nach Anspruch 6, **dadurch gekennzeichnet, dass** die Reaktionsmischung eine Zusammensetzung in Form von Molverhältnissen in den folgenden Bereichen aufweist:
SDA-1(OH)₂/SiO₂ = 0,1-1,0,
M_{1/n}OH/SiO₂ = 0-0,2,
X₂O₃/SiO₂ = 0-0,07,
YO₂/SiO₂ = 0-0,05,
F/SiO₂ = 0,1-2,0,
H₂O/SiO₂ = 1-20,
wobei M ausgewählt ist aus Alkalimetallen, Erdalkalimetallen und Mischungen von diesen.

8. Verfahren nach Anspruch 6 oder 7, **dadurch gekennzeichnet, dass** die eine oder mehreren Quellen für Fluoridionen HF, NH₄F oder eine Mischung von beiden ist bzw. sind.

9. Verfahren nach Anspruch 6 oder 7, **dadurch gekennzeichnet, dass** das organische Kation SDA-1 in einer Form zugefügt wird, die ausgewählt ist aus Hydroxid, Salz und Mischung des Hydroxids und des Salzes, wobei das Salz vorzugsweise ein Halogenid ist.

10. Verfahren nach Anspruch 6 oder 7, **dadurch gekennzeichnet, dass** der Reaktionsmischung eine Menge an kristallinem Material ITQ-39 als Kristallisationspromotor in einer Menge zwischen 0,01 und 20 Gew.% in Bezug auf die gesamten zugefügten anorganischen Oxide zugefügt wird.

11. Verfahren nach Anspruch 6 oder 7, **dadurch gekennzeichnet, dass** der Reaktionsmischung eine Menge an kristallinem Material ITQ-39 als Kristallisationspromotor in einer Menge zwischen 0,05 und 10 Gew.% in Bezug auf die gesamten zugefügten anorganischen Oxide zugefügt wird.

12. Verwendung einer aktiven Form des Materials gemäß Anspruch 1 als Katalysator oder Komponente von Katalysatoren in Verfahren zur Umwandlung von organischen Verbindungen.

13. Verwendung einer aktiven Form des Materials gemäß Anspruch 1 in Verfahren zur Trennung von organischen Verbindungen.

14. Verwendung einer aktiven Form des Materials gemäß Anspruch 1 als Absorbens in Verfahren zur Absorption von organischen Verbindungen.

15. Verwendung nach einem der Ansprüche 12 bis 14, **dadurch gekennzeichnet, dass** das Material in der Form ausgewählt aus der Säure, mit Kationen ausgetauscht und einer Mischung beider Formen vorliegt.

## Revendications

1. Matériau cristallin microporeux zéolitique **caractérisé en ce qu'**il a, à l'état chauffé et en l'absence de défauts dans sa structure cristalline qui se manifestent par la présence de silanols, la formule empirique :
x (M_{1/n}XO₂) : yYO₂ : SiO₂
dans lequel
M est choisi entre H⁺, au moins un cation inorganique de charge +n et un mélange des deux,
X est au moins un élément chimique à l'état d'oxydation +3, choisi entre Al, Ga, B, Fe, Cr et les mélanges de ceux-ci,
Y est au moins un élément chimique à l'état d'oxydation +4 autre que Si, choisi entre Ge, Ti, Sn, V et les mélanges de ceux-ci,
x prend une valeur comprise entre 0 et 0,3, tous deux inclus,
y prend une valeur comprise entre 0 et 0,1, tous deux inclus,
et **en ce que** le matériau, après chauffage, a un diagramme de diffraction des rayons X qui présente au moins les pics de diffraction suivants aux valeurs d'angle 2θ (degrés) et intensités relatives :
| 2θ (degrés) ± 0,5 | Intensité (I/I₀) |
|---|---|
| 7,8 | mf |
| 8,6 | d (h) |
| 14,8 | d |
| 15,8 | d |
| 19,4 | d |
| 21,4 | m |
| 22,1 | f |
| 23,0 | mf |
| 26,3 | m |
| 27,6 | d |
| 32,0 | d |
| 43,9 | d |
où
d est une intensité relativement faible comprise entre 0 et 20 %,
m est une intensité relativement moyenne comprise entre 20 et 40 %,
f est une intensité relativement forte comprise entre 40 et 60 %,
mf est une intensité relativement très forte comprise entre 60 et 100 % et
h rapporte le fait que ce pic de diffraction apparaît sous forme d'un épaulement.

2. Matériau cristallin microporeux zéolitique selon la revendication 1, **caractérisé en ce que** X est Al.

3. Matériau cristallin microporeux zéolitique selon la revendication 1, **caractérisé en ce que** « x » prend une valeur inférieure à 0,2.

4. Matériau cristallin microporeux zéolitique selon la revendication 1, **caractérisé en ce que** « y » prend une valeur inférieure à 0,05, de préférence **caractérisé en ce que** « y » vaut 0.

5. Matériau cristallin microporeux zéolitique selon la revendication 1, dans lequel
M est choisi entre H⁺, au moins un cation inorganique de charge +n choisi parmi les métaux alcalins, les métaux alcalinoterreux et les combinaisons de ceux-ci et un mélange des deux,
y prend une valeur comprise entre 0 et 0,05, tous deux inclus,
et le matériau, brut de synthèse, a un diagramme de diffraction des rayons X présentant au moins les valeurs d'angle 2θ (degrés) et intensités relatives suivantes :
| 2θ (degrés) ± 0,5 | Intensité (I/I₀) |
|---|---|
| 7,8 | f |
| 8,5 | d (h) |
| 15,8 | d |
| 19,3 | d |
| 21,4 | m |
| 22,0 | f |
| 22,8 | mf |
| 26,2 | d |
| 27,5 | d |
| 32,0 | d |
| 43,5 | d |
où
d est une intensité relativement faible comprise entre 0 et 20 %,
m est une intensité relativement moyenne comprise entre 20 et 40 %,
f est une intensité relativement forte comprise entre 40 et 60 %,
mf est une intensité relativement très forte comprise entre 60 et 100 % et
h rapporte le fait que ce pic de diffraction apparaît sous forme d'un épaulement.

6. Procédé pour la synthèse du matériau cristallin microporeux selon l'une quelconque des revendications 1 à 5, **caractérisé en ce que** le mélange réactionnel comprend au moins :
une ou plusieurs sources de SiO₂,
une source facultative d'un ou plusieurs éléments tétravalents Y, autres que Si, choisis entre Ge, Ti, Sn, V et les mélanges de ceux-ci,
une source facultative d'un ou plusieurs éléments trivalents X choisis entre Al, B, Ga, Fe, Cr et les mélanges de ceux-ci,
une source facultative de cation inorganique M de charge +n,
une source d'un dication organique SDA-1, dont la formule est représentée ci-dessous, 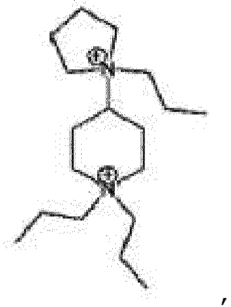
une ou plusieurs sources d'ions fluorure et
de l'eau ;
le mélange est chauffé à une température comprise entre 80 et 200 °C jusqu'à ce que la cristallisation soit réalisée et **en ce que** le mélange réactionnel a une composition, en termes de rapports molaires, dans les plages :
SDA-1(OH)₂/SiO₂ = 0,01-1,0,
M_{1/n}OH/SiO₂ = 0-1,0,
X₂O₃/SiO₂ = 0-0,15,
YO₂/SiO₂ = 0-0,1,
F/SiO₂ = 0,1-3,0,
H₂O/SiO₂ = 0,5-50.

7. Procédé selon la revendication 6, **caractérisé en ce que** le mélange réactionnel a une composition, en termes de rapports molaires, dans les plages :
SDA-1(OH)₂/SiO₂ = 0,1-1,0,
M_{1/n}OH/SiO₂ = 0-0,2,
X₂O₃/SiO₂ = 0-0,07,
YO₂/SiO₂ = 0-0,05,
F/SiO₂ = 0,1-2,0,
H₂O/SiO₂ = 1-20
dans lequel M est choisi parmi les métaux alcalins, les métaux alcalinoterreux et les mélanges de ceux-ci.

8. Procédé selon la revendication 6 ou 7, **caractérisé en ce que** la ou les sources d'ions fluorure sont HF, NH₄F ou un mélange des deux.

9. Procédé selon la revendication 6 ou 7, **caractérisé en ce que** le cation organique SDA-1 est ajouté sous une forme choisie entre un hydroxyde, un sel et un mélange de l'hydroxyde et du sel, de préférence dans lequel le sel est un halogénure.

10. Procédé selon la revendication 6 ou 7, **caractérisé en ce qu'**une certaine quantité de matériau cristallin ITQ-39 est ajoutée au mélange réactionnel en tant que promoteur de cristallisation, en une quantité comprise entre 0,01 et 20 % en poids par rapport aux oxydes inorganiques ajoutés totaux.

11. Procédé selon la revendication 6 ou 7, **caractérisé en ce qu'**une certaine quantité de matériau cristallin ITQ-39 est ajoutée au mélange réactionnel en tant que promoteur de cristallisation, en une quantité comprise entre 0,05 et 10 % en poids par rapport aux oxydes inorganiques ajoutés totaux.

12. Utilisation d'une forme active du matériau selon la revendication 1 en tant que catalyseur ou composant de catalyseurs dans des procédés de transformation de composés organiques.

13. Utilisation d'une forme active du matériau selon la revendication 1 dans des procédés de séparation de composés organiques.

14. Utilisation d'une forme active du matériau selon la revendication 1 en tant qu'absorbant dans des procédés d'absorption de composés organiques.

15. Utilisation selon l'une quelconque des revendications 12 à 14, **caractérisée en ce que** ledit matériau est sous la forme choisie entre la forme acide, la forme ayant subi un échange de cations et un mélange des deux formes.
